# EUROPÄISCHE PATENTSCHRIFT

(11) **EP 2 104 783 B1**
(45) Veröffentlichungstag und Bekanntmachung des Hinweises auf die Patenterteilung: **24.11.2010**
(21) Anmeldenummer: 07847642.1
(22) Anmeldetag: 03.12.2007
(51) Int. Cl.: F02D 41/20, F02D 41/24, H01L 41/04

(54) **VERFAHREN ZUM BETRIEB EINES EINSPRITZVENTILS**
METHOD FOR OPERATING AN INJECTION VALVE
PROCÉDÉ DE FONCTIONNEMENT D'UNE SOUPAPE D'INJECTION

(30) Priorität: 20.12.2006 DE 102006060311
(43) Veröffentlichungstag der Anmeldung: 30.09.2009
(73) Patentinhaber: Robert Bosch GmbH, 70442 Stuttgart (DE)
(72) Erfinder: KLEIN, Manfred, 70839 Gerlingen (DE); BARTH, Jens-Holger, 70736 Fellbach (DE); SCHMITT, Andreas, 71254 Ditzingen (DE); KRIEG, Markus, 71254 Ditzingen (DE)
(86) Internationale Anmeldenummer: PCT/EP2007/063131
(87) Internationale Veröffentlichungsnummer: WO 2008/074618

(56) Entgegenhaltungen:
- EP-A- 1 311 003
- WO-A-2006/134012
- WO-A-2007/088390
- DE-A1- 19 944 733
- DE-A1-102005 032 841

## Beschreibung

### Stand der Technik

Die vorliegende Erfindung betrifft ein Verfahren zum Betrieb eines Einspritzventils, insbesondere eines Einspritzventils einer Einspritzanlage einer Brennkraftmaschine, wobei das Einspritzventil einen piezoelektrischen Aktor umfasst, der über ein Koppelelement mit einer Ventilnadel verbunden ist, wobei an dem piezoelektrischen Aktor eine elektrische Spannung angelegt wird, die zu einer Längenausdehnung bzw. -verkürzung des piezoelektrischen Aktors führt, wobei bei geschlossenem Einspritzventil eine Haltespannung an den piezoelektrischen Aktor angelegt wird. Die Erfindung betrifft des Weiteren eine Vorrichtung, insbesondere Steuergerät, mit Mitteln zum Betrieb eines Einspritzventils sowie ein Computerprogramm mit Programmcode zur Durchführung des Verfahrens.

Aus der EP 1 311 003 A ist ein Verfahren zum Laden und Entladen eines piezoelektrischen Elements bekannt. Dort ist vorgesehen, dass eine Stellbewegung eines Stellglieds in Abhängigkeit von der Höhe einer am piezoelektrischen Element anliegenden Spannung verändert wird. Eine Verringerung der Höhe der anliegenden Spannung während einer Haltephase des piezoelektrischen Elements wird durch mindestens eine zusätzliche Übertragung von elektrischen Ladungsträgern kompensiert.

Ferner ist aus der DE 199 44 733 A1 eine Vorrichtung zum Ansteuern von wenigstens eines kapazitiven Stellgliedes bekannt.

Bei einem Common-Rail-Piezo-Einspritzsystem mit direkt gesteuerter Düsennadel muss der Piezo-Aktor geladen sein, um den Injektor geschlossen zu halten. Zum Öffnen des Injektors bei einer Einspritzung wird der Aktor entladen. Ein gattungsgemäßes Common-Rail-Piezo-Einspritzsystem ist beispielsweise aus der DE 10 2005 032 841 bekannt. Die Spannung, mit der ein Aktor beaufschlagt sein muss, um den Injektor sicher geschlossen zu halten, ist abhängig vom Raildruck. Weiterhin hat die Spannung zu Beginn eines Entladevorgangs des Aktors einen Einfluss auf den Öffnungszeitpunkt des Injektors und damit auf die Einspritzmenge. Fertigungsbedingt weisen Piezo-Aktoren eine Selbstentladung auf, die dazu führt, dass die Spannung eines geladenen Aktors mit der Zeit abnimmt. Dies hat wiederum zur Folge, dass sich Öffnungszeitpunkt und Öffnungsdauern verschieben und damit die Einspritzmenge einer Streuung unterliegt, die betriebspunktabhängig ist, da die Aktorspannung davon abhängt, wie lange keine Ladung bzw. Entladung und damit Bestromung des Aktors stattgefunden hat.

### Offenbarung der Erfindung

Eine Aufgabe der vorliegenden Erfindung ist es, die durch die Selbstentladung piezoelektrischer Aktoren hervorgerufene Streuung von Einspritzzeitpunkt und Einspritzmenge zu kompensieren.

Dieses Problem wird gelöst durch ein Verfahren zum Betrieb eines Einspritzventils, insbesondere eines Einspritzventils einer Einspritzanlage einer Brennkraftmaschine, wobei das Einspritzventil einen piezoelektrischen Aktor umfasst, der über ein Koppelelement mit einer Ventilnadel verbunden ist, wobei an den piezoelektrischen Aktor eine elektrische Spannung angelegt wird, die zu einer Längenausdehnung bzw. -verkürzung des piezoelektrischen Aktors führt, wobei bei geschlossenem Einspritzventil eine Haltespannung an den piezoelektrischen Aktor angelegt wird, wobei die Spannung des piezoelektrischen Aktors durch eine Nachladesequenz auf die Haltespannung gebracht wird. Dabei ist vorgesehen, dass die Spannung des piezoelektrischen Aktors bis zu einem Zeitpunkt so weit vor der Einspritzung auf die Haltespannung gebracht wird, dass das Einspritzventil zu Beginn der Einspritzung in einem stationären Zustand ist.

Vorzugsweise ist vorgesehen, dass die Nachladesequenz mindestens ein Bestromen des piezoelektrischen Aktors umfasst. Unter Bestromen wird hier insbesondere verstanden, eine Spannung an den piezoelektrischen Aktor anzulegen, die zum Fließen eines Stromes und damit zur Veränderung von Ladung und Spannung des piezoelektrischen Aktors führt. Die Selbstentladung des piezoelektrischen Aktors wird durch das erfindungsgemäße Verfahren also ausgeglichen, so dass der Aktor unabhängig von dem Zeitraum, der vergangen ist, seitdem der Aktor auf die Haltespannung gebracht wurde, vor Beginn einer Einspritzung wieder die Haltespannung angelegt ist. Es versteht sich, dass die Haltespannung selbst einen Spannungsbereich darstellt, da auch diese mit Ungenauigkeit behaftet sein kann. Durch das erfindungsgemäße Verfahren wird die Selbstentladung der piezoelektrischen Aktoren kompensiert und die Spannung an allen Aktoren permanent an den jeweiligen Betriebspunkt angepasst. Dadurch wird gewährleistet, dass jeder Injektor zwischen den Ansteuerungen bei jedem Raildruck sicher geschlossen bleibt und dass der mögliche Spannungshub ausreichend für die Darstellung der gewünschten Einspritzmenge in einem bestimmten Betriebspunkt ist. Nach der Steuergeräteinitialisierung sorgt die Nachladefunktion dafür, dass alle Aktoren im Moment des Raildruckaufbaus bei Starterbetätigung auf eine raildruckabhängige Spannung geladen werden. Im Steuergerätenachlauf muss gewährleistet sein, dass alle Aktoren innerhalb einer gewissen Zeit wieder auf die Spannung null Volt entladen werden, um den Berührschutz sicherzustellen. Wenn diese Zeit ausreichend lang ist, bleiben die Injektoren konstruktionsbedingt trotz des Spannungsabbaus geschlossen, so dass ungewollte Einspritzungen ausgeschlossen sind. Ein Vorteil einer permanenten Spannungsnachführung an den Piezo-Aktoren liegt darin, dass der Injektor zu Beginn einer Einspritzsequenz in einem hydraulisch eingeschwungenen Zustand ist und somit eine hohe Mengekonstanz gewährleistet ist. Würde der Aktor erst kurz vor der jeweiligen Ansteuerung auf die betriebspunktabhängige Spannung geladen, kann es zu hohen Spannungshüben durch das Einschwingverhalten des hydraulischen Kopplers zwischen Aktor und Düsennadel und damit zu hohen Mengentoleranzen kommen. Zudem wird durch das erfindungsgemäße Verfahren sichergestellt, dass der Aktor zwischen zwei Einspritzungen permanent auf eine Spannung geladen ist, die den Injektor sicher geschlossen hält.

Vorzugsweise ist vorgesehen, dass die Nachladesequenz mindestens eine Ladeflanke und /oder mindestens eine Entladeflanke umfasst. Dabei kann anhand einer gemessenen Aktorspannung festgelegt werden, ob diese unterhalb oder oberhalb der Haltespannung liegt und daher eine Lade- oder Entladeflanke verwendet wird. Die Nachladesequenz wird vorzugsweise durch einen statischen Interrupt eines Steuergerätes zur Auslösung einer Voreinspritzung aktiviert. Alternativ kann vorgesehen sein, dass je nach Betriebspunkt die Nachladesequenz unmittelbar nach Ende der letzten Einspritzung in einen Zylinder während eines Arbeitstaktes aktiviert wird. Dabei kann die Nachladesequenz bei hohen Drehzahlen unmittelbar nach Ende der letzten Einspritzung in einen Zylinder während eines Arbeitstaktes aktiviert werden. Im Steuergerätevorlauf wird die Nachladesequenz vorzugsweise mit einem konstanten Zeitraster für das Bestromen des piezoelektrischen Aktors durchgeführt. Im Steuergerätenachlauf werden die piezoelektrischen Aktoren vorzugsweise stufenweise entladen. Unter stufenweise wird dabei verstanden, dass die piezoelektrischen Aktoren nicht kontinuierlich, sondern durch zeitlich diskrete Bestromung entladen werden.

Das eingangs genannte Problem wird auch gelöst durch eine Vorrichtung, insbesondere Steuergerät, mit Mitteln zum Betrieb eines Einspritzventils, insbesondere eines Einspritzventils einer Einspritzanlage einer Brennkraftmaschine, wobei das Einspritzventil einen piezoelektrischen Aktor umfasst, der über ein Koppelelement mit einer Ventilnadel verbunden ist, wobei an den piezoelektrischen Aktor eine elektrische Spannung angelegt wird, die zu einer Längenausdehnung bzw. -verkürzung des piezoelektrischen Aktors führt, wobei bei geschlossenem Einspritzventil eine Haltespannung an den piezoelektrischen Aktor angelegt wird, wobei die Spannung des piezoelektrischen Aktors durch eine Nachladesequenz auf die Haltespannung gebracht wird. Das eingangs genannte Problem wird auch gelöst durch ein Computerprogramm mit Programmcode zur Durchführung aller Schritte nach einem erfindungsgemäßen Verfahren, wenn das Programm in einem Computer ausgeführt wird.

### Kurze Beschreibung der Zeichnungen

Nachfolgend wird ein Ausführungsbeispiel der vorliegenden Erfindung anhand der beiliegenden Zeichnungen näher erläutert. Dabei zeigen:
- Fig. 1: eine schematische Darstellung einer Kraftstoffeinspritzanlage eines Kraftfahr- zeugs mit einem einen piezoelektrischen Aktor aufweisenden Einspritzventil;
- Fig. 2: ein schematisches Diagramm der Hysteresekurve eines piezoelektrischen Ak- tors bei doppelter Umpolarisierung;
- Fig. 3: ein Diagramm der an einen piezoelektrischen Aktor anliegenden Spannung über der Zeit;
- Fig. 4: eine Vergrößerung des Abschnitts D in Fig. 3;
- Fig. 5: ein Ablaufdiagramm des Verfahrens.

### Ausführungsform der Erfindung

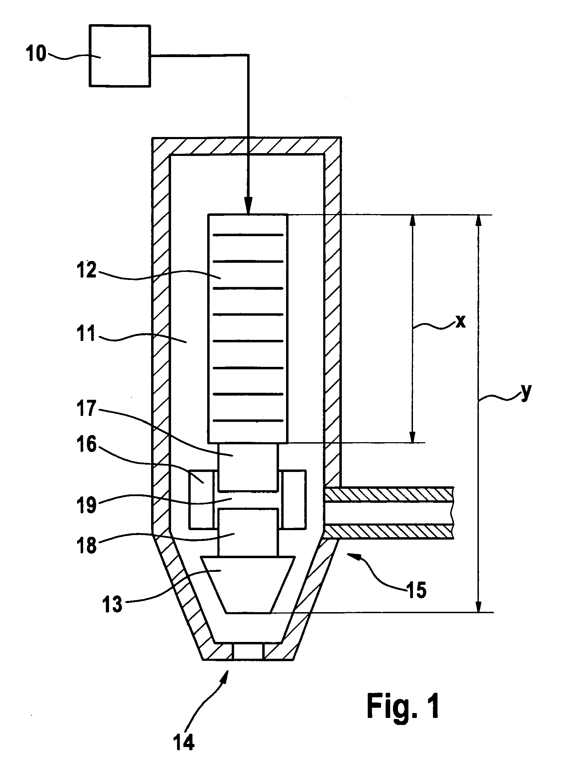

In der Figur 1 ist eine Kraftstoffeinspritzanlage eines Kraftfahrzeugs dargestellt, die ein Steuergerät 10 und ein Einspritzventil 11 aufweist. Das Einspritzventil 11 ist mit einem piezoelektrischen Aktor 12 versehen, der von dem Steuergerät 10 angesteuert wird. Weiterhin weist das Einspritzventil 11 eine Ventilnadel 13 auf, die auf einem Ventilsitz 14 im Inneren des Gehäuses des Einspritzventils 11 aufsitzen kann. Ist die Ventilnadel 13 von dem Ventilsitz abgehoben, so ist das Einspritzventil 11 geöffnet und es wird Kraftstoff eingespritzt. Dieser Zustand ist in der Figur 1 dargestellt. Sitzt die Ventilnadel 13 auf dem Ventilsitz 14 auf, so ist das Einspritzventil 11 geschlossen. Der Übergang von dem geschlossenen in den geöffneten Zustand wird mit Hilfe des piezoelektrischen Aktors 12 bewirkt. Hierzu wird eine elektrische Spannung an den Aktor 12 angelegt, die eine Längenänderung eines Piezostapels hervorruft, die ihrerseits zum Öffnen bzw. Schließen des Einspritzventils 11 ausgenutzt wird. Das Einspritzventil 11 weist einen hydraulischen Koppler 15 auf. Zu diesem Zweck ist innerhalb des Einspritzventils 11 ein Kopplergehäuse 16 vorhanden, in dem zwei Kolben 17, 18 geführt sind. Der Kolben 17 ist mit dem Aktor 12 und der Kolben 18 ist mit der Ventilnadel 13 verbunden. Zwischen den beiden Kolben 17, 18 ist eine Kammer 19 angeordnet, die ein Kolben/Zylindersystem zur Übertragung der von dem Aktor 12 ausgeübten Kraft auf die Ventilnadel 13 bildet. Der Koppler 15 ist von unter Druck stehendem Kraftstoff umgeben. Das Volumen der Kammer 19 ist ebenfalls mit Kraftstoff gefüllt. Über die Führungsspalte zwischen den beiden Kolben 17, 18 und dem Kopplergehäuse 16 kann sich das Volumen der Kammer 19 über einen längeren Zeitraum hinweg an die jeweils vorhandene Länge des Aktors 12 anpassen. Bei kurzzeitigen Änderungen der Länge des Aktors 12 bleibt das Volumen der Kammer 19 und damit deren Länge jedoch nahezu unverändert und die Änderung der Länge des Aktors 12 wird auf die Ventilnadel 13 übertragen. Die Führungsspalte zwischen den beiden Kolben 17, 18 und dem Kopplergehäuse 16 können ein Ventil bilden, das in unterschiedlichen Strömungsrichtungen oder abhängig von der Stellung der Kolben 17, 18 zum Kopplergehäuse 16 unterschiedliche Strömungswiderstände bzw. Durchflussbeiwerte aufweist. Beispielsweise kann einer oder beide Kolben Nute mit veränderlicher Tiefe der Nutböden oder dergleichen aufweisen, um die wirksame durchströmbare Fläche zwischen den Kolben 17, 18 und dem Kopplergehäuse 16 zu verändern. Die Einstellung der Bewegungsgeschwindigkeit der Kolben 17, 18 zueinander erfolgt z.B. durch die Führungsspiele zwischen den Kolben 17, 18 und dem Kopplergehäuse 16 oder durch eine Kleine Drossel mit richtungsabhängigem Durchflussbeiwert.

Das Einspritzventil 11 befindet sich unabhängig vom Arbeitspunkt des Aktors 12 immer dann in seinem geschlossenen Zustand, wenn der Aktor 12 über einen längeren Zeitraum hinweg unverändert an einem beliebigen Punkt der Hysteresekurve 40 verbleibt. Ein Öffnen des Einspritzventils 11 erfolgt dann durch eine vergleichsweise schnelle Verkürzung des Aktors 12 aus diesem Punkt der Hysteresekurve 40 heraus. Ein Schließen des Einspritzventils 11 wird durch die Rückkehr des Aktors 12 in seinen vor Beginn der Einspritzung vorliegenden Arbeitspunkt erreicht.

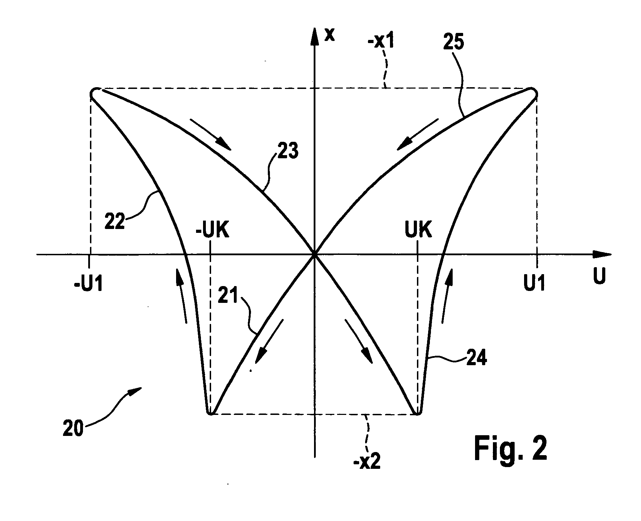

In der Figur 2 ist der Zusammenhang zwischen der an einem piezoelektrischen Aktor angelegten Spannung U und der daraus resultierenden Längenänderung bzw. Verkürzung x des Aktors dargestellt. Dieser Zusammenhang stellt eine Hysteresekurve 20 des Aktors dar. Es wird davon ausgegangen, dass sich der Aktor im Nullpunkt der Hysteresekurve 20 befindet, dass also keine Spannung an dem Aktor anliegt, und dass der Aktor weder eine Längenausdehnung, noch eine Kürzung aufweist. Weiterhin wird davon ausgegangen, dass der Aktor momentan in Richtung der positiven Spannung polarisiert ist. Wird nunmehr die Spannung an dem Aktor in negativer Richtung verändert, so hat dies eine Verkürzung des Aktors zur Folge. Dies ergibt sich aus dem Ast 21 der Hysteresekurve 20. Wird die negative Spannung -U K erreicht, die der so genannten Koerzitivfeldstärke entspricht, so beginnt sich der Aktor umzupolarisieren. Bei dieser negativen Spannung -UK weist der Aktor seine größte Verkürzung -x2 auf. Wird nunmehr die der Koerzitivfeldstärke entsprechende Spannung -UK unterschritten, so nimmt die Länge des Aktors wieder zu. Dies wird aus dem Ast 22 der Hysteresekurve 20 ersichtlich. Bei der negativen Spannung -UI besitzt der Aktor dann seine größte Längenausdehnung xl. Weiterhin führt das Durchlaufen des Astes 22 der Hysteresekurve 20 zu einem Wechsel der Polarisation des Aktors. Wird nunmehr die an dem Aktor angelegte Spannung wieder in positiver Richtung erhöht, so wird der Ast 23 der Hysteresekurve 20 durchlaufen. Die Länge des Aktors verändert sich von der Längenausdehnung xl wieder zu der Verkürzung -x2. Diese größte Verkürzung -x2 weist der Aktor bei der positiven Spannung U K auf. Nach einem Überschreiten der positiven Spannung U K erfolgt erneut eine Umpolarisierung des Aktors, so dass bei einer weiteren Erhöhung der Spannung der Ast 24 durchlaufen wird. Dieser Ast 24 endet bei der positiven Spannung UI, bei der der Aktor die größte Längenausdehnung xl aufweist. Wird nunmehr wieder die an dem Aktor angelegte Spannung vermindert, so vermindert sich die Längenausdehnung des Aktors. Dies ergibt sich aus dem Ast 25 der Hysteresekurve 20. Der Ast 25 geht dann im Bereich des Nullpunkts wieder in den Ast 21 der Hysteresekurve 20 über.

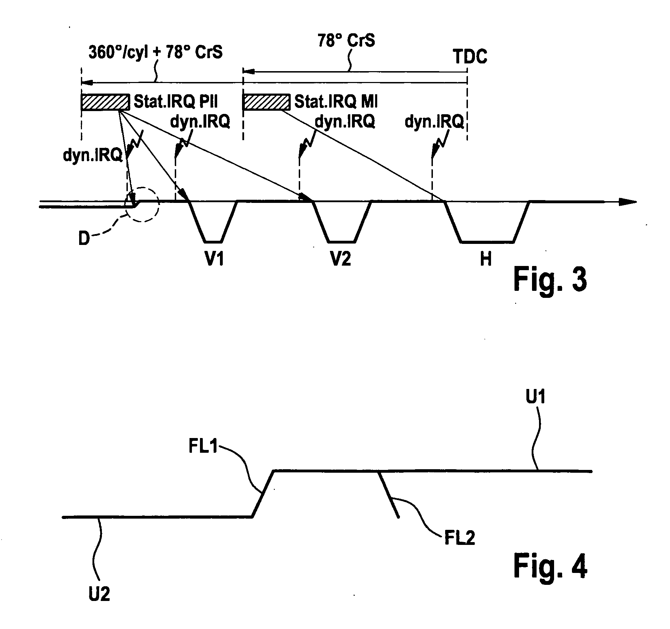

Fig. 3 zeigt ein Diagramm eines Ausführungsbeispiels einer erfindungsgemäßen Nachladesequenz über der Zeit. Dargestellt ist der Spannungsverlauf der Spannung U des piezoelektrischen Aktors 12 über der Zeit t. Eine abgesetzte Einspritzung ist durch ein Absenken der Spannung U auf ein niedrigeres Spannungsniveau U_{B} zu erkennen, im Beispiel der Fig. 3 ist eine Haupteinspritzung H sowie zwei Voreinspritzungen V1 und V2 dargestellt. Vor jeder Einspritzung, also der Haupteinspritzung und den Voreinspritzungen, wird ein dynamischer Interrupt DYN.IRQ erzeugt, wobei das Steuergerät bei jedem der Interrupte zum Absetzen einer Einspritzung angewiesen wird. Die dynamischen Interrupte DYN.IRQ werden jeweils aus statischen Interrupten des Steuergerätes zu bestimmten Kurbelwellenwinkeln, hier sind dies ein statischer Interrupt Stat. IRQ.PIL und ein statischer Interrupt Stat. IRQ.MI, erzeugt. Der statische Interrupt Stat. IRQ.MI wird zur Bestimmung des dynamischen Interruptes DYN.IRQ_H für die Haupteinspritzung verwendet, der statische Interrupt Stat. IRQ.PIL wird zur Bestimmung der dynamischen Interrupte DYN.IRQ_V1 zum Absetzen der ersten Voreinspritzung V1 und dem dynamischen Interrupt DYN.IRQ_V2 zum Absetzen der zweiten Voreinspritzung V2 verwendet. Zusätzlich wird der statische Interrupt IRQ.PIL verwendet, um den Beginn einer Nachladesequenz NL zu ermitteln. Die Nachladesequenz NL ist als Abschnitt "D" in Fig. 3 vergrößert in Fig. 4 dargestellt und umfasst eine einsteigende Flanke FL1 sowie eine absteigende Flanke FL2. Ausgehend von einer Spannung U2, die niedriger als die Haltespannung U1 ist, wird durch die ansteigende Flanke die an dem piezoelektrischen Aktor 12 anliegende Spannung U auf die Haltespannung U1 angehoben. Die absteigende Flanke FL2 hat in diesem Fall keine Wirkung. Sollte die an dem piezoelektrischen Aktor anliegende Spannung U höher sein als die Haltespannung U1, so hat die ansteigende Flanke FL1 keine Wirkung, dafür wird mit der absteigenden Flanke FL2 die Spannung auf den Wert der Haltespannung U1 abgesenkt. Der Zeitraum zwischen dem Ende der Nachladesequenz NL und dem dynamischen Interrupt DYN.IRQ_V1 zum Absetzen der ersten Voreinspritzung ist so gewählt, dass sich das Einspritzventil 11 im eingeschwungenen Zustand befindet, das also insbesondere das Koppelelement keine Ausgleichsbewegung mehr durchführt.

Eine Nachladesequenz besteht aus einer Ladeflanke FL1 und einer Entladeflanke FL2, die unmittelbar hintereinander ausgeführt werden und die beide die gleiche Zielspannung, nämlich die Haltespannung U1, haben. Je nach Ausgangsspannung bewirkt eine der beiden Flanken den Angleich an die Soll-Spannung, dies ist hier die Haltespannung U1, die andere Flanke hat keine Wirkung. Alternativ kann die Spannung U des piezoelektrischen Aktors 12 gemessen werden und bestimmt werden, ob diese unterhalb oder oberhalb der Haltespannung U1 liegt. Daraufhin wird die Ladeflanke FL1 oder die Entladeflanke FL2 ausgewählt um die Spannung U auf die Haltespannung U1 zu bringen. Liegt die Spannung U unterhalb der Haltespannung U1, so wird die Ladeflanke FL1 angewandt, liegt die Spannung U oberhalb der Haltespannung U1, so wird die Entladeflanke FL2 angewandt.

Nach der Steuergeräte-Initialisierung und unterhalb einer Drehzahlschwelle n_{RECHG}, bei der keine Einspritzungen freigegeben sind und somit keine Drehzahlinterrupts generiert werden, geschieht das Nachladen der Aktoren 12 zeitsynchron in einem vorgegebenen Raster, beispielsweise im 10-Millisekunden-Raster.

Oberhalb der Drehzahlschwelle n_{RECHG} wird der statische Interrupt der Voreinspritzungen Stat. IRQ.PIL genutzt, um die Nachladesequenz zu programmieren bzw. auszulösen. Die Programmierung der Nachladesequenz erfolgt analog zu der einer Voreinspritzung, d. h. auch hier wird ein dynamischer Interrupt DYN.IRQ_NL generiert. Der Ansteuerbeginn der Nachladesequenz wird betriebspunktabhängig appliziert und muss vor der ersten Ansteuerung einer Einspritzsequenz auf diesem Zylinder liegen. Der Abstand der Nachladesequenz zur nächsten folgenden Ansteuerung soll unter Ausnutzung des verfügbaren Winkelbereichs so groß wie möglich sein. Dadurch ist sichergestellt, dass die Zeit zwischen Nachladesequenz und erster Ansteuerung einer Einspritzung, in Fig. 3 ist dies die erste Voreinspritzung V1, ausreichend lang ist, um das hydraulische Koppelelement 15 einschwingen zu lassen.

Wenn bei hohen Drehzahlen der Zeitraum zwischen dem statischen Interrupt der Voreinspritzungen Stat. IRQ.PIL und der ersten Voreinspritzung V1 nicht ausreicht, um eine Nachladesequenz zu programmieren, so wird diese bereits nach Ende der letzten Einspritzung des vorhergehenden Zylinders programmiert. Dabei wird der statische Interrupt der Haupteinspritzung Stat. IRQ.MI benutzt, um den Zeitpunkt der letzten Ansteuerung auf dem jeweiligen Zylinder zu bestimmen.

Im Steuergerätnachlauf werden die Aktoren 12 innerhalb einer konfigurierbaren Zeit in einem zeitsynchronen Raster stufenweise entladen. Die Höhe einer Spannungsstufe ergibt sich dabei aus der abzubauenden Spannung an den Aktoren und der dafür zur Verfügung stehenden Zeit in dem verwendeten Zeitraster.

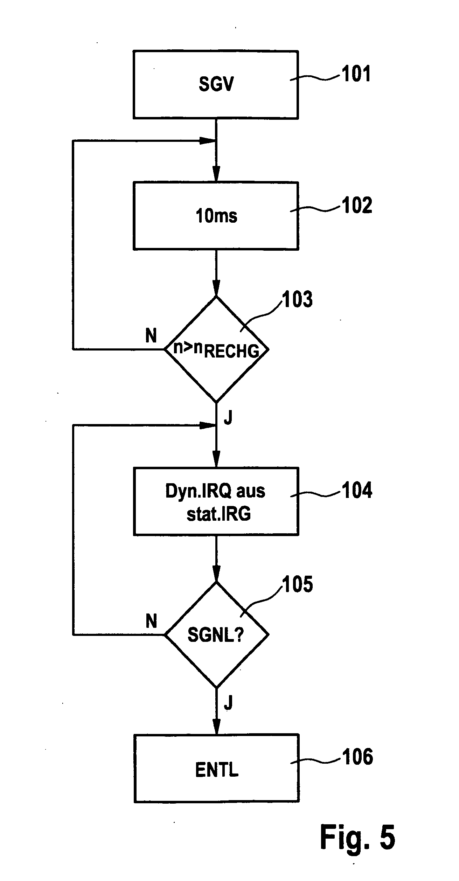

Fig. 5 zeigt ein Ablaufdiagramm des Verfahrens. Das Verfahren beginnt in Schritt 101 mit dem Beginn des Steuergerätevorlaufs SGV. Daraufhin wird in Schritt 102 ein Nachladen der Aktoren 12 zeitsynchron in einem Raster von beispielsweise 10ms ausgelöst. In Schritt 103 wird überprüft, ob die Drehzahl n größer der Drehzahlschwelle n_{RECHG} ist. Ist dies nicht der Fall, so wird in der Option N zurückverzweigt auf Schritt 102, das konstante Zeitraster bleibt also erhalten. Ergibt die Prüfung in Schritt 103 die Option J, ist also die Drehzahl n größer der Drehzahlschwelle n_{RECHG}, so werden die dynamischen Interrupte in Schritt 104 aus den statischen Interrupten wie zuvor dargestellt generiert. Schritt 104 bleibt solange aktiv, bis die Brennkraftmaschine abgeschaltet wird und in den Steuergerätenachlauf SGNL übergeht, dies wird dauerhaft durch eine Schleife mit der Prüfung in Schritt 105 geprüft. Beim Übergang in den Steuergerätenachlauf findet ein Entladen der Aktoren in Schritt 106 wie zuvor beschrieben statt.

## Patentansprüche

1. Verfahren zum Betrieb eines Einspritzventils (11), insbesondere eines Einspritzventils (11) einer Einspritzanlage einer Brennkraftmaschine, wobei das Einspritzventil (11) einen piezoelektrischen Aktor (12) umfasst, der über ein Koppelelement (15) mit einer Ventilnadel (13) verbunden ist, wobei an den piezoelektrischen Aktor (12) eine elektrische Spannung (U) angelegt wird, die zu einer Längenausdehnung bzw. -verkürzung (x) des piezoelektrischen Aktors (12) führt, wobei bei geschlossenem Einspritzventil (11) eine Haltespannung (+-U1) an den piezoelektrischen Aktor (12) angelegt wird, wobei die Spannung (U) des piezoelektrischen Aktors (12) durch eine Nachladesequenz auf die Haltespannung (U1) gebracht wird, **dadurch gekennzeichnet, dass** die Spannung (U) des piezoelektrischen Aktors (12) zu einem Zeitpunkt so weit vor einer Einspritzung auf die Haltespannung (U1) gebracht wird, dass das Einspritzventil (11) zu Beginn der Einspritzung in einem stationären Zustand ist.

2. Verfahren nach Anspruch 1, **dadurch gekennzeichnet, dass** die Nachladesequenz mindestens ein Bestromen des piezoelektrischen Aktors (12) umfasst.

3. Verfahren nach einem der Ansprüche 1 bis 2, **dadurch gekennzeichnet, dass** die Nachladesequenz mindestens eine Ladeflanke (FL1) und /oder mindestens eine Entladeflanke (FL2) umfasst.

4. Verfahren nach einem der Ansprüche 1 bis 3, **dadurch gekennzeichnet, dass** die Nachladesequenz durch einen statischen Interrupt (IRQ.PIL) eines Steuergerätes (10) zur Auslösung einer Voreinspritzung (V1, V2) aktiviert wird.

5. Verfahren nach einem der Ansprüche 1 bis 3, **dadurch gekennzeichnet, dass** die Nachladesequenz unmittelbar nach Ende der letzten Einspritzung in einen Zylinder während eines Arbeitstaktes aktiviert wird.

6. Verfahren nach Anspruch 5, **dadurch gekennzeichnet, dass** die Nachladesequenz bei hohen Drehzahlen unmittelbar nach Ende der letzten Einspritzung (H) in einen Zylinder während eines Arbeitstaktes aktiviert wird.

7. Verfahren nach einem der Ansprüche 1 bis 6, **dadurch gekennzeichnet, dass** die Nachladesequenz im Steuergerätevorlauf mit einem konstanten Zeitraster für das Bestromen des piezoelektrischen Aktors (12) erfolgt.

8. Vorrichtung, insbesondere Steuergerät, mit Mitteln zum Betrieb eines Einspritzventils (11), insbesondere eines Einspritzventils (11) einer Einspritzanlage einer Brennkraftmaschine, wobei das Einspritzventil (11) einen piezoelektrischen Aktor (12) umfasst, der über ein Koppelelement (15) mit einer Ventilnadel (13) verbunden ist, wobei an den piezoelektrischen Aktor (12) eine elektrische Spannung (U) angelegt wird, die zu einer Längenausdehnung bzw. -verkürzung (x) des piezoelektrischen Aktors (12) führt, wobei bei geschlossenem Einspritzventil (11) eine Haltespannung (+-U1) an den piezoelektrischen Aktor (12) angelegt wird, wobei die Spannung (U) des piezoelektrischen Aktors (12) durch eine Nachladesequenz auf die Haltespannung (U1) gebracht wird, **dadurch gekennzeichnet, dass** die Spannung (U) des piezoelektrischen Aktors (12) zu einem Zeitpunkt so weit vor einer Einspritzung auf die Haltespannung (U1) gebracht wird, dass das Einspritzventil (11) zu Beginn der Einspritzung in einem stationären Zustand ist.

9. Computerprogramm mit Programmcode zur Durchführung aller Schritte nach einem der Ansprüche 1 bis 7, wenn das Programm in einem Computer ausgeführt wird.

## Claims

1. Method for operating an injection valve (11), in particular an injection valve (11) of an injection system of an internal combustion engine, with the injection valve (11) comprising a piezoelectric actuator (12) which is connected via a coupling element (15) to a valve needle (13), with an electrical voltage (U) being applied to the piezoelectric actuator (12), which voltage leads to a length expansion or contraction (x) of the piezoelectric actuator (12), with a holding voltage (+-U1) being applied to the piezoelectric actuator (12) when the injection valve (11) is closed, with the voltage (U) of the piezoelectric actuator (12) being adjusted to the holding voltage (U1) by means of a recharging sequence, **characterized in that** the voltage (U) of the piezoelectric actuator (12) is adjusted to the holding voltage (U1) at an instant which precedes an injection by such a length of time that the injection valve (11) is in a steady state at the start of the injection.

2. Method according to Claim 1, **characterized in that** the recharging sequence comprises at least one supply of electrical current to the piezoelectric actuator (12).

3. Method according to one of Claims 1 to 2, **characterized in that** the recharging sequence comprises at least one charging flank (FL1) and/or at least one discharging flank (FL2).

4. Method according to one of Claims 1 to 3, **characterized in that** the recharging sequence is activated by means of a static interrupt (IRQ.PIL) of a control unit (10) for triggering a pilot injection (V1, V2).

5. Method according to one of Claims 1 to 3, **characterized in that** the recharging sequence is activated directly after the end of the final injection into a cylinder during a working stroke.

6. Method according to Claim 5, **characterized in that**, at high engine speeds, the recharging sequence is activated directly after the end of the final injection (H) into a cylinder during a working stroke.

7. Method according to one of Claims 1 to 6, **characterized in that**, in the control unit advance phase, the recharging sequence takes place with a constant time pattern for the supply of electrical current to the piezoelectric actuator (12).

8. Device, in particular control unit, having means for operating an injection valve (11), in particular an injection valve (11) of an injection system of an internal combustion engine, with the injection valve (11) comprising a piezoelectric actuator (12) which is connected via a coupling element (15) to a valve needle (13), with an electrical voltage (U) being applied to the piezoelectric actuator (12), which voltage leads to a length expansion or contraction (x) of the piezoelectric actuator (12), with a holding voltage (+-U1) being applied to the piezoelectric actuator (12) when the injection valve (11) is closed, with the voltage (U) of the piezoelectric actuator (12) being adjusted to the holding voltage (U1) by means of a recharging sequence, **characterized in that** the voltage (U) of the piezoelectric actuator (12) is adjusted to the holding voltage (U1) at an instant which precedes an injection by such a length of time that the injection valve (11) is in a steady state at the start of the injection.

9. Computer program with program code for carrying out all the steps according to one of Claims 1 to 7 when the program is executed in a computer.

## Revendications

1. Procédé de fonctionnement d'une soupape d'injection (11), en particulier d'une soupape d'injection (11) d'une installation d'injection d'un moteur à combustion interne, dans lequel la soupape d'injection (11) comprend un actionneur piézoélectrique (12), qui est connecté par le biais d'un élément d'accouplement (15) à une aiguille de soupape (13), une tension électrique (U) étant appliquée à l'actionneur piézoélectrique (12), et provoquant un allongement ou un raccourcissement (x) de l'actionneur piézoélectrique (12), une tension de retenue (+-U1) étant appliquée à l'actionneur piézoélectrique (12) lorsque la soupape d'injection (11) est fermée, la tension (U) de l'actionneur piézoélectrique (12) étant appliquée par une séquence de recharge appliquée à la tension de retenue (U1), **caractérisé en ce que** la tension (U) de l'actionneur piézoélectrique (12) est appliquée à la tension de retenue (U1) à un instant précédant l'injection tel que la soupape d'injection (11) soit dans un état stationnaire au début de l'injection.

2. Procédé selon la revendication 1, **caractérisé en ce que** la séquence de recharge comprend au moins l'alimentation en courant de l'actionneur piézoélectrique (12).

3. Procédé selon l'une quelconque des revendications 1 à 2, **caractérisé en ce que** la séquence de recharge comprend au moins un flanc de charge (FL1) et/ou au moins un flanc de décharge (FL2).

4. Procédé selon l'une quelconque des revendications 1 à 3, **caractérisé en ce que** la séquence de recharge est activée par une interruption statique (IRQ.PIL) d'un appareil de commande (10) permettant de déclencher une pré-injection (V1, V2).

5. Procédé selon l'une quelconque des revendications 1 à 3, **caractérisé en ce que** la séquence de recharge est activée immédiatement à la fin de la dernière injection dans un cylindre pendant un temps de travail.

6. Procédé selon la revendication 5, **caractérisé en ce que** la séquence de recharge est activée lors de régimes élevés directement à la fin de la dernière injection (H) dans un cylindre pendant un temps de travail.

7. Procédé selon l'une quelconque des revendications 1 à 6, **caractérisé en ce que** la séquence de recharge a lieu pendant la course aller de l'appareil de commande avec une trame temporelle constante pour l'alimentation en courant de l'actionneur piézoélectrique (12).

8. Dispositif, en particulier appareil de commande, comprenant des moyens pour le fonctionnement d'une soupape d'injection (11), en particulier d'une soupape d'injection (11) d'une installation d'injection d'un moteur à combustion interne, dans lequel la soupape d'injection (11) comprend un actionneur piézoélectrique (12), qui est connecté par le biais d'un élément d'accouplement (15) à une aiguille de soupape (13), une tension électrique (U) étant appliquée à l'actionneur piézoélectrique (12), et provoquant un allongement ou un raccourcissement (x) de l'actionneur piézoélectrique (12), une tension de retenue (+-U1) étant appliquée à l'actionneur piézoélectrique (12) lorsque la soupape d'injection (11) est fermée, la tension (U) de l'actionneur piézoélectrique (12) étant appliquée par une séquence de recharge appliquée à la tension de retenue (U1), **caractérisé en ce que** la tension (U) de l'actionneur piézoélectrique (12) est appliquée à la tension de retenue (U1) à un instant précédant l'injection tel que la soupape d'injection (11) soit dans un état stationnaire au début de l'injection.

9. Programme informatique avec un code programme pour exécuter toutes les étapes selon l'une quelconque des revendications 1 à 7, lorsque le programme est exécuté dans un ordinateur.
